# EUROPÄISCHE PATENTSCHRIFT

(11) **EP 3 421 770 B1**
(45) Veröffentlichungstag und Bekanntmachung des Hinweises auf die Patenterteilung: **05.08.2020**
(21) Anmeldenummer: 18177575.0
(22) Anmeldetag: 13.06.2018
(51) Int. Cl.: F02F 3/22, B23K 20/12

(54) **VERFAHREN ZUR HERSTELLUNG EINES KOLBENS FÜR EINE BRENNKRAFTMASCHINE AUS EINEM KOLBENOBERTEIL UND AUS EINEM KOLBENUNTERTEIL**
METHOD FOR PRODUCING A PISTON FOR A COMBUSTION ENGINE FROM A PISTON UPPER PART AND A PISTON LOWER PART
PROCÉDÉ DE FABRICATION D'UN PISTON POUR UN MOTEUR À COMBUSTION INTERNE À PARTIR D'UNE PARTIE SUPÉRIEURE DE PISTON ET D'UNE PARTIE INFÉRIEURE DE PISTON

(30) Priorität: 27.06.2017 DE 102017210818
(43) Veröffentlichungstag der Anmeldung: 02.01.2019
(73) Patentinhaber: Mahle International GmbH, 70376 Stuttgart (DE)
(72) Erfinder: WINKLER, Peter, 70191 Stuttgart (DE)
(74) Vertreter: BRP Renaud & Partner mbB Rechtsanwälte Patentanwälte Steuerberater

(56) Entgegenhaltungen:
- JP-A- 2006 052 671
- JP-A- 2010 155 265
- US-A1- 2013 000 483
- US-A1- 2014 000 453

## Beschreibung

Die vorliegende Erfindung betrifft ein Verfahren zur Herstellung eines Kolbens für eine Brennkraftmaschine aus einem Kolbenoberteil und aus einem Kolbenunterteil. Die Erfindung betrifft ferner eine Reibschweißeinrichtung, die zur Durchführung dieses Verfahrens ausgebildet ist.

Aus dem Stand der Technik ist es bekannt, zum Zusammenbau eines Kolbens das Kolbenoberteil und das Kolbenunterteil mittels Reibschweißens aneinander zu befestigen.

Als nachteilig erweist sich jedoch dabei oftmals, dass eine beim Reibschweißen typischerweise entstehende Schweißwulst sich in Bereichen des Kolbens, insbesondere in der Innenform des Kolbens unter der Kolbenmulde, ausbildet, die eigentlich für die Pleuelbewegung freizuhalten sind.

JP2006052671 A und US2013000483 A1 offenbaren Verfahren zum Reibschweißen von Kolben.

Es ist daher eine Aufgabe der vorliegenden Erfindung, eine verbesserte Ausführungsform für ein Herstellungsverfahren für ein Kolbenoberteil bzw. Kolbenunterteil zu schaffen, bei welchem der vorangehend genannte Nachteil nicht mehr oder allenfalls in stark abgeschwächter Form auftritt.

Dieses Problem wird erfindungsgemäß durch die Gegenstände der unabhängigen Ansprüche gelöst. Vorteilhafte Ausführungsformen sind Gegenstand der abhängigen Ansprüche.

Grundgedanke der Erfindung ist demnach, vor dem Fügen eines Kolbenoberteils und eines Kolbenunterteils mittels Reibschweißens an einer hierfür ausgebildeten Reibschweißeinrichtung eine Ablenkeinrichtung vorzusehen, auf welcher die im Zuge des Reibschweißvorgangs entstehende Schweißwulst anläuft und somit abgelenkt wird. Durch ein solches Ablenken der Schweißwulst wird sichergestellt, dass für die Bewegung des Pleuels erforderliche Freiräume nicht eingeschränkt werden. Insbesondere kann bei geeigneter Realisierung der Ablenkeinrichtung verhindert werden, dass sich die Schweißwulst an Stellen ausbildet, an welchen sie nach Montage des Pleuels am Kolben mit dem Pleuel mechanisch in Kontakt stehen würde.

Das erfindungsgemäße Verfahren zur Herstellung eines Kolbens aus einem Kolbenoberteil und einem Kolbenunterteil mittels einer Reibschweißeinrichtung umfasst einen Verfahrensschritt a). Gemäß diesem Verfahrensschritt a) werden ein Kolbenoberteil und ein Kolbenunterteil zum Aneinanderfügen bereitgestellt. Bevorzugt bestehen das Kolbenoberteil und/oder das Kolbenunterteil aus einem Stahl. Das Kolbenoberteil weist einen Kolbenboden mit einer Verbrennungsmulde auf. Das Kolbenunterteil weist zwei einander gegenüberliegende Schaftelemente auf, die über zwei einander gegenüberliegenden Bolzennaben miteinander verbunden sind. In einem Verfahrensschritt b) wird eine Ablenkeinrichtung bereitgestellt. Die Ablenkeinrichtung kann an einer Spannvorrichtung der Reibschweißeinrichtung zum Einspannen von Kolbenoberteil und/oder Kolbenunterteil befestigt werden. In diesem Fall ist die Ablenkeinrichtung ein gegenüber der Spannvorrichtung separates Bauteil, welches, vorzugsweise lösbar, an der Spannvorrichtung befestigt werden kann. Alternativ dazu denkbar ist aber auch eine integrale Ausformung der Ablenkreinrichtung an der Spannvorrichtung. In allen voranstehend genannten Varianten ist die Ablenkeinrichtung zum Ablenken zumindest einer beim Reibschweißen von Kolbenoberteil und Kolbenunterteil entstehenden Schweißwulst ausgebildet.

In einem Verfahrensschritt c) werden das Kolbenoberteil und das Kolbenunterteil schließlich in der Reibschweißeinrichtung mittels Reibschweißens aneinander gefügt. Nach dem Reibschweißen kann eine Nachbearbeitung besagter Schweißwulst - um das Vorhandensein besagter Freiräume sicherzustellen - entfallen.

Gemäß einer bevorzugten Ausführungsform ist die Ablenkeinrichtung, derart ausgebildet und/oder dimensioniert, dass die beim Reibschweißen entstehende Schweißwulst nach der Montage des tatsächlichen Pleuels am Kolben im Abstand zum Pleuelauge dieses Pleuels angeordnet ist. Mittels einer solchen Überdimensionierung der Ablenkeinrichtung kann ein unerwünschter mechanischer Kontakt des Pleuelauges des Pleuels mit der beim Reibschweißen entstehenden Schweißwulst besonders wirksam vermieden werden.

Gemäß einer anderen bevorzugten Ausführungsform des Verfahrens weist das in Schritt a) bereitgestellte Kolbenunterteil eine von den Schaftelementen nach oben, zum Kolbenoberteil hin abstehende radial innere und radial äußere Ringwand auf. Bei dieser Ausführungsform bildet ein zwischen diesen beiden Ringwänden ausgebildeter Zwischenraum einen unteren Teil eines Kühlkanals des aus Kolbenoberteil und Kolbenunterteil gebildeten Kolbens aus. Die Ablenkeinrichtung und das Kolbenunterteil sind derart aufeinander abgestimmt, dass die Ablenkeinrichtung nach dem Anbringen am Kolbenunterteil gemäß Schritt b) zumindest abschnittsweise an dessen radial innerer Ringwand anliegt.

Gemäß einer vorteilhaften Weiterbildung wird eine von der inneren Ringwand des Kolbenunterteils eingefasste Durchgangsöffnung in Verfahrensschritt b) von der Ablenkeinrichtung teilweise verschlossen.

Bevorzugt wird die Ablenkeinrichtung in Verfahrensschritt b) mit einem ringförmigen Kontaktabschnitt an der radial inneren Ringwand des Kolbenunterteils zur Anlage gebracht. Bevorzugt ist der ringförmige Kontaktabschnitt ein äußerer Rand der Ablenkeinrichtung.

Bei einer weiteren vorteilhaften Weiterbildung weist das in Schritt a) bereitgestellte Kolbenoberteil eine vom Kolbenboden nach unten, zum Kolbenunterteil hin abstehende radial innere und radial äußere Ringwand auf. Dabei bildet ein zwischen den beiden Ringwänden gebildeter Zwischenraum einen oberen Teil eines Kühlkanals des aus Kolbenoberteil und Kolbenunterteil gebildeten Kolbens aus. Bei dieser Weiterbildung des Verfahrens werden in Schritt c) die beiden radial inneren Ringwände und die beiden radial äußeren Ringwände mittels Reibschweißens miteinander verbunden.

Die Erfindung betrifft weiterhin eine Reibschweißeinrichtung zur Herstellung eines Kolbens für eine Brennkraftmaschine, welcher ein Kolbenoberteil und ein Kolbenunterteil umfasst, wobei die Reibschweißeinrichtung zum Fügen von Kolbenoberteil und Kolbenunterteil aneinander mittels Reibschweißens ausgebildet ist. Insbesondere ist die Reibschweißeinrichtung zur Durchführung des vorangehend vorgestellten Verfahrens eingerichtet, so dass sich die oben erläuterten Vorteile des Verfahrens auf die Reibschweißeinrichtung übertragen. Die erfindungsgemäße Reibschweißeinrichtung umfasst eine Spannvorrichtung zum Einspannen des Kolbenoberteils und des Kolbenunterteils. Erfindungswesentlich ist eine Ablenkeinrichtung zum Ablenken der beim Reibschweißen entstehenden Schweißwulst. Bevorzugt ist diese Ablenkeinrichtung, insbesondere lösbar, an der Spannvorrichtung befestigt. Alternativ denkbar ist eine integrale Ausformung der Ablenkeinrichtung an der Spannvorrichtung.

Bei einer vorteilhaften Weiterbildung ist in der Ablenkeinrichtung wenigstens ein von einem Kühlmittel durchströmbarer Kühlmittelkanal ausgebildet. Auf diese Weise kann eine Überhitzung der Ablenkreinrichtung während des Reibschweißvorgangs verhindert werden.

Bei einer weiteren bevorzugten Ausführungsform ist die Ablenkeinrichtung derart ausgebildet und/oder dimensioniert, dass die beim Reibschweißen entstehende Schweißwulst nach der Montage eines Pleuels am Kolben im Abstand zum Pleuelauge dieses Pleuels angeordnet ist. Mittels einer solchen Überdimensionierung der Ablenkeinrichtung kann ein unerwünschter mechanischer Kontakt des Pleuelauges des Pleuels mit der beim Reibschweißen entstehenden Schweißwulst besonders wirksam vermieden werden. Besonders bevorzugt wird die Ablenkeinrichtung zumindest bereichsweise, insbesondere in einem Bereich, in welchem sich die Schweißwulst ausbilden wird, mit größeren Außenmaßen versehen als das Pleuelauge des am Kolben zu montierenden Pleuels. Mittels einer solchen Überdimensionierung der Ablenkeinrichtung kann ein unerwünschter mechanischer Kontakt des Pleuelauges des Pleuels mit der beim Reibschweißen entstehenden Schweißwulst besonders wirksam vermieden werden.

Zweckmäßig verschließt die Ablenkeinrichtung eine in der Spannvorrichtung eingespanntem Kolbenunterteil eine von der inneren Ringwand des Kolbenunterteils eingefasste Durchgangsöffnung teilweise.

Bei einer vorteilhaften Weiterbildung weist die Ablenkeinrichtung einen ringförmigen Kontaktabschnitt auf, der bei in der Spannvorrichtung eingespanntem Kolbenunterteil an der radial inneren Ringwand des Kolbenunterteils anliegt. Besonders zweckmäßig ist der ringförmige Kontaktabschnitt ein äußerer Rand der Ablenkeinrichtung.

Besonders bevorzugt besitzt ein dem Kolbenoberteil bei in der Spannvorrichtung eingespanntem Kolbenunterteil zugewandter Bereich der Ablenkeinrichtung in einem Längsschnitt des Kolbenunterteils die Oberflächenkontur eines Kreissegments.

Gemäß einer weiteren bevorzugten Ausführungsform weist das Kolbenoberteil eine vom Kolbenboden nach unten, zum Kolbenunterteil hin abstehende radial innere sowie eine radial äußere Ringwand auf. Dabei bildet ein zwischen diesen beiden Ringwänden ausgebildeter Zwischenraum einen oberen Teil des Kühlkanals des aus Kolbenoberteil und Kolbenunterteil gebildeten Kolbens aus. Bei dieser Ausführungsform weist das Kolbenunterteil eine von den Schaftelementen nach oben, zum Kolbenoberteil hin abstehende radial innere und eine radial äußere Ringwand auf. Dabei bildet ein zwischen diesen beiden Ringwänden vorhandener Zwischenraum einen unteren Teil eines Kühlkanals des aus Kolbenoberteil und Kolbenunterteil gebildeten Kolbens aus.

Weitere wichtige Merkmale und Vorteile der Erfindung ergeben sich aus den Unteransprüchen, aus der Zeichnung und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es zeigen, jeweils schematisch:
- Fig. 1: ein Beispiel einer erfindungsgemäße Reibschweißeinrichtung zur Herstellung eines Kolbens,
- Fig. 2: eine Detaildarstellung der Figur 1 im Bereich der Schweißwulst.

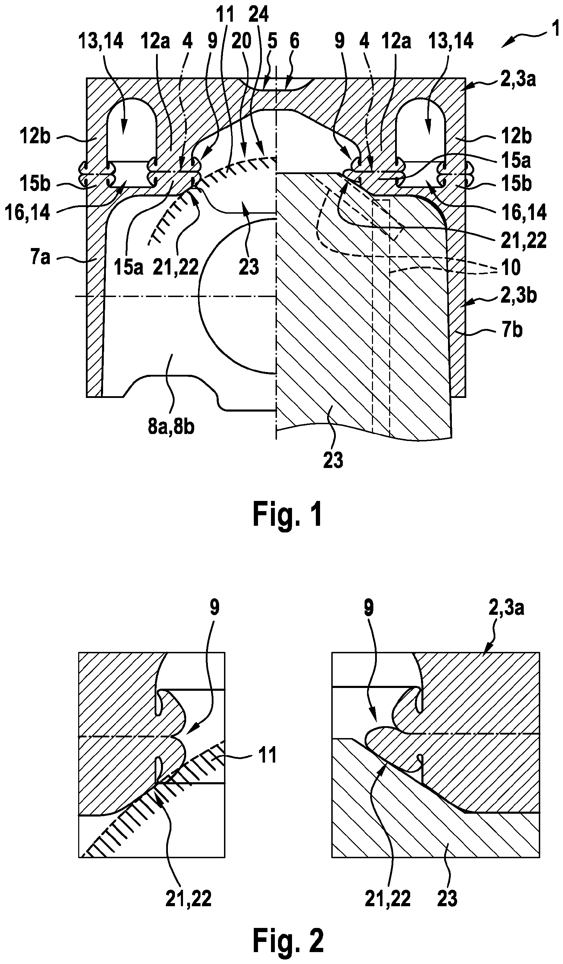

Die Figuren 1 und 2 illustrieren ein Beispiel einer erfindungsgemäßen Reibschweißeinrichtung 1 zur Herstellung eines Kolbens 2 für eine Brennkraftmaschine aus einem Kolbenoberteil 3a und aus einem Kolbenunterteil 3b, jeweils aus Stahl. Die Reibschweißeinrichtung 1 dient zum Fügen von Kolbenoberteil 3a und Kolbenunterteil 3b mittels Reibschweißens. Die Reibschweißeinrichtung 1 umfasst eine in der Figur nur teilweise gezeigte Spannvorrichtung 23, in welche das Kolbenoberteil 3a bzw. das Kolbenunterteil 3b zum Reibschweißen eingespannt werden können. Der genauere technische Aufbau einer Reibschweißeinrichtung 1 ist dem einschlägigen Fachmann bekannt, so dass im Folgenden auf eine detailliertere Erläuterung verzichtet wird.

Das Kolbenoberteil 3a umfasst einen Kolbenboden 5 mit einer Verbrennungsmulde 6. Das Kolbenunterteil 3b weist zwei einander gegenüberliegende Schaftelemente 7a, 7b auf, die über zwei einander gegenüberliegende Bolzennaben 8a, 8b miteinander verbunden sind. Das Kolbenoberteil 3a weist eine vom Kolbenboden 5 nach unten, zum Kolbenunterteil 3b hin abstehende radial innere Ringwand 12a sowie und eine vom Kolbenboden 5 nach unten, zum Kolbenunterteil 3b hin abstehende radial äußere Ringwand 12b auf. Zwischen den beiden Ringwänden 12a, 12b ist ein Zwischenraum 13 vorhanden, der einen oberen Teil eines Kühlkanals 14 des aus dem Kolbenoberteil 3a und dem Kolbenunterteil 3b gebildeten Kolbens 2 ausbildet. Das Kolbenunterteil 3b weist eine von den Schaftelementen 7a, 7b nach oben, zum Kolbenoberteil 3a hin abstehende radial innere Ringwand 15a auf. Ebenso weist das Kolbenunterteil 3b eine von den Schaftelementen 7a, 7b nach oben, zum Kolbenoberteil 3a hin abstehende radial äußere Ringwand 15b auf. Zwischen den beiden Ringwänden 15a, 15b ist ein Zwischenraum 16 vorhanden, der einen unteren Teil 25 des Kühlkanals 14 ausbildet. Im Beispielszenario sind nach Abschluss des Reibschweiß-Vorgangs die beiden radial inneren Ringwände 12a, 15a und die beiden radial äußeren Ringwände 12b, 15b mittels einer Reibschweißverbindung 4 miteinander verbunden.

Zum Erzeugen der Reibschweißverbindung 4 werden das Kolbenoberteil 3a und, alternativ oder zusätzlich, das Kolbenunterteil 3b nach dem Einspannen in die Spannvorrichtung 23 der Reibschweißeinrichtung 1 von dieser in Rotation versetzt und unter Druck gegen den jeweiligen Reibpartner gepresst, wodurch die Fügeflächen der radial inneren Ringwände 12a, 15a bis auf die Fügetemperatur erhitzt werden. Nach Ablauf einer bestimmten Zeitspanne wird die Rotation wieder gestoppt. In der Reibschweißeinrichtung 1 werden unter Erhöhung des anfänglichen Anpressdrucks das Kolbenoberteil 3a und das Kolbenunterteil 3b aufeinander zu bewegt, wodurch unter Ausbildung einer Schweißwulst eine stoffschlüssige Verbindung zwischen den beiden Kolbenteilen 3a, 3b entsteht. Die Wegstrecke, um welche das Kolbenoberteil 3a und das Kolbenunterteil 3b aufeinander zu bewegt werden, wird oftmals als "Stauchweg" bezeichnet. Je größer der Stauchweg, desto größer ist die sich beim Reibschweißen ausbildende Schweißwulst 9.

Um ein unerwünschtes Eindringen der beim Reibschweißen entstehenden Schweißwulst in einen im Kolben 2 freizuhaltenden Freiraum zu verhindern, umfasst die Reibschweißeinrichtung 1 eine Ablenkeinrichtung 11 zum Ablenken der beim Reibschweißen entstehenden Schweißwulst 9. Die sich beim Reibschweißen ausbildende Schweißwulst 9 läuft gegen die Ablenkeinrichtung 11 auf und wird auf diese Weise umgelenkt, so dass sie nicht mehr in besagten Freiraum gelangen kann. Die Ablenkeinrichtung 11 kann, vorzugsweise lösbar, an der Spannvorrichtung 23 befestigt sein. Denkbar ist aber auch eine integrale Ausbildung der Ablenkeinrichtung 11 an der Spannvorrichtung 23.

Die Ablenkeinrichtung 11 ist derart dimensioniert, dass die beim Reibschweißen entstehende Schweißwulst 9 nach der Montage des tatsächlichen Pleuels am Kolben (nicht gezeigt) im Abstand zum Pleuelauge dieses Pleuels (nicht gezeigt) angeordnet ist. Hierfür kann die Ablenkeinrichtung 11 zumindest in demjenigen Bereich, in welchem die Schweißwulst 9 anlaufen wird, mit größeren Außenmaßen versehen werden als ein Pleuelauge des Pleuels.

Wie die Figur 1 erkennen lässt, weist die Ablenkeinrichtung 11 einen ringförmigen Kontaktabschnitt 21 auf, der an der radial inneren Ringwand 15a anliegt. Bevorzugt ist der ringförmige Kontaktabschnitt 21 ein äußerer Rand 22 der Ablenkeinrichtung 11. Dabei verschließt die Ablenkeinrichtung 11 in dem am Kolbenunterteil 3b befestigten Zustand eine von der radial inneren Ringwand 15a eingefasste Durchgangsöffnung 20 teilweise. Ein dem Kolbenoberteil 3a zugewandter Bereich 24 der Ablenkeinrichtung 11 besitzt in indem in Figur 1 gezeigten Längsschnitt des Kolbenunterteils 3b die Oberflächenkontur eines Kreis- bzw. Zylindersegments.

Wie die Figuren 1 und 2 anschaulich illustrieren, kann in der Ablenkeinrichtung 11 auch wenigstens ein Kühlmittelkanal 10 zum Durchströmen mit einem Kühlmittel ausgebildet sein. Auf diese Weise wird eine Überhitzung der Ablenkreinrichtung 11 während des Reibschweißens verhindert. Der Kühlmittelkanal 10 kann Teil eines Kühlkreislaufes sein. Besagtes Kühlmittel kann ein Schutzgas, beispielsweise Stickstoff, aber auch Luft sein. Auch die Verwendung eines flüssigen Kühlmediums ist möglich.

## Patentansprüche

1. Verfahren zur Herstellung eines Kolbens (2) für eine Brennkraftmaschine aus einem Kolbenoberteil (3a) und aus einem Kolbenunterteil (3b),
umfassend die folgenden Schritte:
a) Bereitstellen des Kolbenoberteils (3a), vorzugsweise aus Stahl, und des Kolbenunterteils (3b), vorzugsweise aus Stahl, in einer Reibschweißeinrichtung (1), wobei das Kolbenoberteil (3) einen Kolbenboden (5) mit einer Verbrennungsmulde (6) aufweist, und wobei das Kolbenunterteil (3b) zwei einander gegenüberliegende Schaftelemente (7a, 7b) aufweist, die über zwei einander gegenüberliegenden Bolzennaben (8a, 8b) miteinander verbunden sind,
b) Bereitstellen einer Ablenkeinrichtung (11), die zum Ablenken zumindest einer beim Reibschweißen entstehenden Schweißwulst (9) ausgebildet ist, an oder in der Reibschweißeinrichtung (1),
c) Aneinanderfügen von Kolbenoberteil (3a) und Kolbenunterteil (3b) mittels Reibschweißens.

2. Verfahren nach Anspruch 1,
**dadurch gekennzeichnet, dass**
die Ablenkeinrichtung (11) derart ausgebildet und/oder dimensioniert ist, dass die beim Reibschweißen entstehende Schweißwulst (9) nach der Montage eines Pleuels am Kolben im Abstand zum Pleuelauge dieses Pleuels angeordnet ist.

3. Verfahren nach Anspruch 1 oder 2,
**dadurch gekennzeichnet, dass**
die Ablenkeinrichtung (11) zumindest bereichsweise, insbesondere in einem Bereich, in welchem sich die Schweißwulst (9) ausbilden wird, mit größeren Außenmaßen versehen ist als ein Pleuelauge des am Kolben (2) zu montierenden Pleuels.

4. Verfahren nach einem der vorhergehenden Ansprüche,
**dadurch gekennzeichnet, dass**
- das in Schritt a) bereitgestellte Kolbenunterteil (3b) eine von den Schaftelementen (7a, 7b) nach oben, zum Kolbenoberteil (3a) hin abstehende radial innere und radial äußere Ringwand (15a, 15b) aufweist, so dass ein zwischen diesen beiden Ringwänden (15a, 15b) ausgebildeter Zwischenraum (16) einen unteren Teil (25) eines Kühlkanals (14) des aus Kolbenoberteil (3a) und Kolbenunterteil (3b) gebildeten Kolbens (2) ausbildet,
- die Ablenkeinrichtung (11) und das Kolbenunterteil (3b) derart aufeinander abgestimmt sind, dass die Ablenkeinrichtung (11) nach dem Anbringen am Kolbenunterteil (3b) gemäß Schritt b) zumindest abschnittsweise an dessen radial innerer Ringwand (15a) anliegt.

5. Verfahren nach Anspruch 4,
**dadurch gekennzeichnet, dass**
eine von der inneren Ringwand (15a) des Kolbenunterteils (3b) eingefasste Durchgangsöffnung (20) in Verfahrensschritt b) von der Ablenkeinrichtung (11) teilweise verschlossen wird.

6. Verfahren nach Anspruch 4 oder 5,
**dadurch gekennzeichnet, dass**
die Ablenkeinrichtung (11) in Verfahrensschritt b) mit einem ringförmigen Kontaktabschnitt (21) an der radial inneren Ringwand (15a) des Kolbenunterteils (3b) zur Anlage gebracht wird,
wobei der ringförmige Kontaktabschnitt (21) vorzugsweise ein äußerer Rand (22) der Ablenkeinrichtung (11) ist.

7. Verfahren nach einem der vorhergehenden Ansprüche,
**dadurch gekennzeichnet, dass**
- das in Schritt a) bereitgestellte Kolbenoberteil (3a) eine vom Kolbenboden (5) nach unten, zum Kolbenunterteil (3b) hin abstehende radial innere und radial äußere Ringwand (12a, 12b) aufweist, so dass ein zwischen den beiden Ringwänden (12a, 12b) ausgebildeter Zwischenraum (13) einen oberen Teil eines Kühlkanals (14) des aus Kolbenoberteil (3a) und Kolbenunterteil (3b) gebildeten Kolbens (2) ausbildet,
- in Schritt c) die beiden radial inneren Ringwände (12a, 15a) und die beiden radial äußeren Ringwände (12b, 15b) mittels Reibschweißens miteinander verbunden werden.

8. Reibschweißeinrichtung (1) zur Herstellung eines Kolbens (2) für eine Brennkraftmaschine mit einem Kolbenoberteil (3a) und mit einem Kolbenunterteil (3b), welche zum Fügen von Kolbenoberteil (3a) und Kolbenunterteil (3b) aneinander mittels Reibschweißens ausgebildet ist, und welche bevorzugt zur Durchführung des Verfahrens nach einem der vorhergehenden Ansprüche eingerichtet ist,
- mit einer Spannvorrichtung (23) zum Einspannen des Kolbenoberteils (3a) und des Kolbenunterteils (3b),
- mit einer Ablenkeinrichtung (11) zum Ablenken der beim Reibschweißen entstehenden Schweißwulst (9), wobei die Ablenkeinrichtung (11) bevorzugt an der Spannvorrichtung (23), vorzugsweise lösbar, befestigt oder integral ausgeformt ist.

9. Reibschweißeinrichtung nach Anspruch 8,
**dadurch gekennzeichnet, dass**
dass in der Ablenkeinrichtung (11) wenigstens ein von einem Kühlmittel durchströmbarer Kühlmittelkanal (10) ausgebildet ist.

10. Reibschweißeinrichtung nach Anspruch 8 oder 9,
**dadurch gekennzeichnet, dass**
die Ablenkeinrichtung (11) bei eingespanntem Kolbenunterteil (3b) eine von der inneren Ringwand (15a) des Kolbenunterteils (3b) eingefasste Durchgangsöffnung (20) teilweise verschließt.

11. Reibschweißeinrichtung nach einem der Ansprüche 8 bis 10,
**dadurch gekennzeichnet, dass**
die Ablenkeinrichtung einen ringförmigen Kontaktabschnitt (21) aufweist, der bei eingespanntem Kolbenunterteil (3b) an der radial inneren Ringwand (15a) des Kolbenunterteils (3b) anliegt.

12. Reibschweißeinrichtung nach Anspruch 11,
**dadurch gekennzeichnet, dass**
der ringförmige Kontaktabschnitt (21) ein äußerer Rand (22) der Ablenkeinrichtung (11) ist.

13. Reibschweißeinrichtung nach einem der Ansprüche 8 bis 12,
**dadurch gekennzeichnet, dass**
ein dem eingespanntem Kolbenoberteil (3a) zugewandter Bereich (24) der Ablenkeinrichtung (11) in einem Längsschnitt des Kolbenunterteils (3b) die Oberflächenkontur eines Kreis- oder Zylindersegments besitzt.

14. Reibschweißeinrichtung nach einem der Ansprüche 8 bis 13,
**dadurch gekennzeichnet, dass**
- das Kolbenoberteil (3a) eine vom Kolbenboden (4) nach unten, zum Kolbenunterteil (3b) hin abstehende radial innere und eine radial äußere Ringwand (12a, 12b) aufweist, so dass ein zwischen diesen beiden Ringwänden (12a, 12b) ausgebildeter Zwischenraum (13) einen oberen Teil eines Kühlkanals (14) des aus Kolbenoberteil (3a) und Kolbenunterteil (3b) gebildeten Kolbens (2) ausbildet,
- das Kolbenunterteil (3b) eine von den Schaftelementen (7a, 7b) nach oben, zum Kolbenoberteil (3a) hin abstehende radial innere und eine radial äußere Ringwand (15a, 15b) aufweist, so dass ein zwischen diesen beiden Ringwänden (15a, 15b) ausgebildeter Zwischenraum (16) einen unteren Teil (25) eines Kühlkanals (14) des aus Kolbenoberteil (3a) und Kolbenunterteil gebildeten Kolbens (2) ausbildet.

## Claims

1. Method for producing a piston (2) for an internal combustion engine from a piston upper part (3a) and a piston lower part (3b),
comprising the following steps:
a) provision of the piston upper part (3a), preferably of steel, and of the piston lower part (3b), preferably of steel, in a friction welding device (1), wherein the piston upper part (3) has a piston head (5) with a combustion cavity (6), and wherein the piston lower part (3b) has two mutually opposite skirt elements (7a, 7b) connected to one another via two mutually opposite pin bosses (8a, 8b),
b) provision of a deflecting device (11), configured to deflect at least one weld bead (9) arising during the friction welding, on or in the friction welding device (1),
c) joining of piston upper part (3a) and piston lower part (3b) to one another by means of friction welding.

2. Method according to claim 1,
**characterised in that**
the deflecting device (11) is configured and/or dimensioned such that, after the mounting of a connecting rod on the piston, the weld bead (9) arising during the friction welding is disposed at a distance from the connecting-rod eye of said connecting rod.

3. Method according to claim 1 or 2,
**characterised in that**
the deflecting device (11) is provided, at least in some regions, in particular in a region in which the weld bead (9) will form, with larger external dimensions than a connecting-rod eye of the connecting rod to be mounted on the piston (2).

4. Method according to any one of the preceding claims,
**characterised in that**
- the piston lower part (3b) provided in step a) has a radially inner and radially outer annular wall (15a, 15b) which project upwardly from the skirt elements (7a, 7b) towards the piston upper part (3a), such that an interspace (16) formed between these two annular walls (15a, 15b) forms a lower part (25) of a cooling duct (14) of the piston (2) formed from piston upper part (3a) and piston lower part (3b),
- the deflecting device (11) and the piston lower part (3b) are tailored to one another in such a way that the deflecting device (11), after being mounted on the piston lower part (3b) according to step b), bears at least in certain portions on its radially inner annular wall (15a).

5. Method according to claim 4,
**characterised in that**
a through-opening (20) enclosed by the inner annular wall (15a) of the piston lower part (3b) is partially closed by the deflecting device (11) in method step b).

6. Method according to claim 4 or 5,
**characterised in that**
the deflecting device (11) in method step b) is brought to bear against the radially inner annular wall (15a) of the piston lower part (3b) with an annular contact portion (21),
wherein the annular contact portion (21) is preferably an outer edge (22) of the deflecting device (11).

7. Method according to any one of the preceding claims,
**characterised in that**
- the piston upper part (3a) provided in step a) has a radially inner and radially outer annular wall (12a, 12b) which project downwardly from the piston head (5) towards the piston lower part (3b), such that an interspace (13) formed between the two annular walls (12a, 12b) forms an upper part of a cooling duct (14) of the piston (2) formed from piston upper part (3a) and piston lower part (3b),
- in step c) the two radially inner annular walls (12a, 15a) and the two radially outer annular walls (12b, 15b) are connected to one another by means of friction welding.

8. Friction welding device (1) for producing a piston (2) for an internal combustion engine comprising a piston upper part (3a) and a piston lower part (3b), which is configured for joining piston upper part (3a) and piston lower part (3b) to one another by means of friction welding, and which is constructed preferably to carry out the method according to any one of the preceding claims,
- comprising a clamping device (23) for clamping the piston upper part (3a) and the piston lower part (3b),
- comprising a deflecting device (11) for deflecting the weld bead (9) arising during the friction welding, wherein the deflecting device (11) is preferably fastened, preferably releasably, to the clamping device (23) or is formed integrally.

9. Friction welding device according to claim 8,
**characterised in that**
at least one cooling agent duct (10) through which a cooling agent can flow is formed in the deflecting device (11).

10. Friction welding device according to claim 8 or 9,
**characterised in that**,
when the piston lower part (3b) is clamped, the deflecting device (11) partially closes a through-opening (20) enclosed by the inner annular wall (15a) of the piston lower part (3b).

11. Friction welding device according to any one of claims 8 to 10,
**characterised in that**
the deflecting device has an annular contact portion (21), which, when the piston lower part (3b) is clamped, bears against the radially inner annular wall (15a) of the piston lower part (3b).

12. Friction welding device according to claim 11,
**characterised in that**
the annular contact portion (21) is an outer edge (22) of the deflecting device (11).

13. Friction welding device according to any one of claims 8 to 12,
**characterised in that**
a region (24) of the deflecting device (11) facing the clamped piston upper part (3a) has, in a longitudinal section of the piston lower part (3b), the surface contour of a circle segment of cylinder segment.

14. Friction welding device according to any one of claims 8 to 13,
**characterised in that**
- the piston upper part (3a) has a radially inner and a radially outer annular wall (12a, 12b) which project downwardly from the piston head (5) towards the piston lower part (3b), such that an interspace (13) formed between these two annular walls (12a, 12b) forms an upper part of a cooling duct (14) of the piston (2) formed from piston upper part (3a) and piston lower part (3b),
- the piston lower part (3b) has a radially inner and a radially outer annular wall (15a, 15b) which project upwardly from the skirt elements (7a, 7b) towards the piston upper part (3a), such that an interspace (16) formed between these two annular walls (15a, 15b) forms a lower part (25) of a cooling duct (14) of the piston (2) formed from piston upper part (3a) and piston lower part.

## Revendications

1. Procédé permettant la fabrication d'un piston (2) pour un moteur à combustion interne composé d'une partie supérieure de piston (3a) et d'une partie inférieure de piston (3b),
comprenant les étapes suivantes :
a) la fourniture de la partie supérieure de piston (3a), de préférence en acier, et de la partie inférieure de piston (3b), de préférence en acier, dans un dispositif de soudage par friction (1), dans lequel la partie supérieure de piston (3) présente un fond de piston (5) avec un bol de combustion (6), et dans lequel la partie inférieure de piston (3b) présente deux éléments tige (7a, 7b) opposés l'un à l'autre, qui sont reliés l'un à l'autre par l'intermédiaire de deux bossages d'axe (8a, 8b) opposés l'un à l'autre,
b) la fourniture d'un dispositif de déviation (11), qui est conçu pour dévier au moins un bourrelet de soudure (9) produit lors du soudage par friction, sur ou dans le dispositif de soudage par friction (1),
c) l'assemblage des partie supérieure de piston (3a) et partie inférieure de piston (3b) au moyen d'un soudage par friction.

2. Procédé selon la revendication 1,
**caractérisé en ce que**
le dispositif de déviation (11) est conçu et/ou dimensionné de telle sorte que le bourrelet de soudure (9) produit lors du soudage par friction est disposé après le montage d'une bielle sur le piston à distance de la tête de bielle de cette bielle.

3. Procédé selon la revendication 1 ou 2,
**caractérisé en ce que**
le dispositif de déviation (11) est pourvu au moins au moins par endroits, en particulier dans une zone dans laquelle le bourrelet de soudure (9) se réalisera, de dimensions extérieures plus grandes qu'une tête de bielle de la bielle à monter sur le piston (2).

4. Procédé selon l'une quelconque des revendications précédentes,
**caractérisé en ce que**
- la partie inférieure de piston (3b) fournie à l'étape a) présente une paroi annulaire (15a, 15b) radialement intérieure et radialement extérieure faisant saillie des éléments tige (7a, 7b) vers le haut, en direction de la partie supérieure de piston (3a), de sorte qu'un espace intermédiaire (16) réalisé entre ces deux parois annulaires (15a, 15b) réalise une partie inférieure (25) d'un canal de refroidissement (14) du piston (2) formé des partie supérieure de piston (3a) et partie inférieure de piston (3b),
- le dispositif de déviation (11) et la partie inférieure de piston (3b) sont adaptés l'un à l'autre, de telle sorte que le dispositif de déviation (11), après la fixation sur la partie inférieure de piston (3b) selon l'étape b), s'applique au moins sur certaines sections sur la paroi annulaire (15a) radialement intérieure de celle-ci.

5. Procédé selon la revendication 4,
**caractérisé en ce que**
une ouverture de passage (20) bordée par la paroi annulaire (15a) intérieure de la partie inférieure de piston (3b) est fermée partiellement par le dispositif de déviation (11) à l'étape de procédé b).

6. Procédé selon la revendication 4 ou 5,
**caractérisé en ce que**
le dispositif de déviation (11), à l'étape de procédé b), est amené en appui avec une section de contact annulaire (21) sur la paroi annulaire (15a) radialement intérieure de la partie inférieure de piston (3b),
dans lequel la section de contact annulaire (21) est de préférence un bord extérieur (22) du dispositif de déviation (11).

7. Procédé selon l'une quelconque des revendications précédentes,
**caractérisé en ce que**
- la partie supérieure de piston (3a) fournie à l'étape a) présente une paroi annulaire (12a, 12b) radialement intérieure et radialement extérieure, faisant saillie du fond de piston (5) vers le bas en direction de la partie inférieure de piston (3b), de sorte qu'un espace intermédiaire (13) réalisé entre les deux parois annulaires (12a, 12b) réalise une partie supérieure d'un canal de refroidissement (14) du piston (2) formé des partie supérieure de piston (3a) et partie inférieure de piston (3b),
- à l'étape c), les deux parois annulaires (12a, 15a) radialement intérieures et les deux parois annulaires (12b, 15b) radialement extérieures sont reliées les unes aux autres au moyen d'un soudage par friction.

8. Dispositif de soudage par friction (1) permettant la fabrication d'un piston (2) pour un moteur à combustion interne avec une partie supérieure de piston (3a) et avec une partie inférieure de piston (3b), lequel est réalisé pour l'assemblage des partie supérieure de piston (3a) et partie inférieure de piston (3b) au moyen d'un soudage par friction, et lequel est conçu de préférence pour mettre en œuvre le procédé selon l'une quelconque des revendications précédentes,
- avec un dispositif de serrage (23) permettant le serrage de la partie supérieure de piston (3a) et de la partie inférieure de piston (3b),
- avec un dispositif de déviation (11) permettant la déviation du bourrelet de soudure (9) produit lors du soudage par friction, dans lequel le dispositif de déviation (11) est de préférence fixé, de préférence de manière détachable, ou formé d'un seul tenant sur le dispositif de serrage (23).

9. Dispositif de soudage par friction selon la revendication 8,
**caractérisé en ce que**
**que** au moins un canal de refroidissement (10) pouvant être traversé par un liquide de refroidissement est réalisé dans le dispositif de déviation (11).

10. Dispositif de soudage par friction selon la revendication 8 ou 9,
**caractérisé en ce que**
le dispositif de déviation (11), lorsque la partie inférieure de piston (3b) est serrée, ferme partiellement une ouverture de passage (20) bordée par la paroi annulaire (15a) intérieure de la partie inférieure de piston (3b).

11. Dispositif de soudage par friction selon l'une quelconque des revendications 8 à 10,
**caractérisé en ce que**
le dispositif de déviation présente une section de contact annulaire (21), qui, lorsque la partie inférieure de piston (3b) est serrée, s'applique sur la paroi annulaire (15a) radialement intérieure de la partie inférieure de piston (3b).

12. Dispositif de soudage par friction selon la revendication 11,
**caractérisé en ce que**
la section de contact annulaire (21) est un bord extérieur (22) du dispositif de déviation (11).

13. Dispositif de soudage par friction selon l'une quelconque des revendications 8 à 12,
**caractérisé en ce que**
une zone (24) du dispositif de déviation (11) tournée vers la partie supérieure de piston (3a) serrée possède dans une coupe longitudinale de la partie inférieure de piston (3b) le contour de surface d'un segment circulaire ou cylindrique.

14. Dispositif de soudage par friction selon l'une quelconque des revendications 8 à 13,
**caractérisé en ce que**
- la partie supérieure de piston (3a) présente une paroi annulaire (12a, 12b) radialement intérieure et une radialement extérieure faisant saillie du fond de piston (5) vers le bas en direction de la partie inférieure de piston (3b), de sorte qu'un espace intermédiaire (13) réalisé entre ces deux parois annulaires (12a, 12b) réalise une partie supérieure d'un canal de refroidissement (14) du piston (2) formé des partie supérieure de piston (3a) et partie inférieure de piston (3b),
- la partie inférieure de piston (3b) présente une paroi annulaire (15a, 15b) radialement intérieure et une radialement extérieure faisant saillie des éléments tige (7a, 7b) vers le haut en direction de la partie supérieure de piston (3a), de sorte qu'un espace intermédiaire (16) réalisé entre ces deux parois annulaires (15a, 15b) réalise une partie inférieure (25) d'un canal de refroidissement (14) du piston (2) formé des partie supérieure de piston (3a) et partie inférieure de piston.
